Europäisches Patentamt

European Patent Office

Office européen des brevets

(11) Veröffentlichungsnummer: **0 390 047**
**A1**

## EUROPÄISCHE PATENTANMELDUNG

(21) Anmeldenummer: 90105748.9

(22) Anmeldetag: 26.03.90

(51) Int. Cl.5: **F16L 13/14, F16L 33/00, F16L 37/00**

(30) Priorität: 30.03.89 DE 3910232

(43) Veröffentlichungstag der Anmeldung:
**03.10.90 Patentblatt 90/40**

(84) Benannte Vertragsstaaten:
**DE ES FR GB IT SE**

(71) Anmelder: **Techno-Chemie Kessler & Co. GmbH**
**Dieselstrasse 4**
**D-6367 Karben 1(DE)**

(72) Erfinder: **Müller, Hartmut, Dipl.-Ing.**
**Rendelerstrasse 10**
**D-6368 Bad Vilbel(DE)**
Erfinder: **Thieme, Christian, Dipl.-Kfm.**
**Scherenbostelerstrasse 59**
**D-3002 Wedemark 2(DE)**

(74) Vertreter: **Schieferdecker, Lutz, Dipl.-Ing.**
**Herrnstrasse 37**
**D-6050 Offenbach am Main(DE)**

(54) **Verfahren zum Verbinden von Rohrenden und dgl.**

(57) Die Erfindung betrifft ein Verfahren zum Verbinden von zwei ineinander steckbaren, zylindrischen Teilen, insbesondere von Rohrenden aneinander bzw. mit Rohr- und Schlauchanschlußteilen mittels durchmesserreduzierender Kaltverformung. Ferner betrifft die Erfindung ein Verbindungsstück zur Durchführung dieses Verfahrens.

Der Kern der Erfindung liegt darin, daß mindestens eines der ineinander zu steckenden, zylindrischen Teile ein Verbindungsstück aufweist, das vor der durchmesserreduzierenden Kaltverformung einen Innendurchmesser erhält, der größer ist als das gemeinsame Innendurchmesser-Endmaß beider Teile und daß die durchmesserreduzierende Kaltverformung sodann bis zur Erzielung der Verbindung beider Teile aneinander erfolgt.

Fig. 1

EP 0 390 047 A1

Die Erfindung betrifft ein Verfahren zum Verbinden von zwei ineinander steckbaren, zylindrischen Teilen, insbesondere von Rohrenden aneinander bzw. mit Rohr- und Schlauchanschlußteilen mittels durchmesserreduzierender Kaltverformung. Ferner betrifft die Erfindung ein Verbindungsstück zur Durchführung dieses Verfahrens.

Aus der EP 134 566 A2 ist es bekannt, zwei zylindrische Rohrstücke ineinander zu stecken und sodann dadurch unverlierbar aneinander zu fixieren, daß der Werkstoff beider Rohrstücke im Bereich von zwei, im Abstand voneinander befindlichen Ringzonen durch Kaltverformung radial einwärts verlagert wird. Hierbei erhält das äussere Rohrstück umlaufende, nutförmige Einkerbungen, die sich an der Innenwand des Aussenrohres und an dem eingesteckten Rohrstück als Wellen fortsetzen. In axialer Richtung sind beide Rohrstücke dadurch unverlierbar fixiert.

Ferner ist es aus der DE 34 45 662 A1 bekannt, eine Anschlußhülse auf einem metallischen Ringwellschlauch dadurch zu befestigen, daß die Hülse auf wenigstens eine Ringwelle des Schlauches kalt oder warm aufgesickt, aufgebördelt, aufgewalzt oder aufgepreßt wird. Zum Abdichten kann ferner zwischen Schlauch und Hülse ein geeigneter Dichtwerkstoff eingelegt sein.

Die bekannten Herstellungsverfahren zum Verbinden von ineinander steckbaren, zylindrischen Teilen führen dazu, daß Absätze an den Verbindungsstellen entstehen. Solche Absätze sind aber unter strömungstechnischen Gesichtspunkten für viele Anwendungsfälle unerwünscht, und es ist daher das Ziel der Erfindung, ein Verfahren zum Verbinden von zwei ineinander steckbaren, zylindrischen Teilen anzugeben, das die Herstellung eines glatten Durchganges ohne Absätze beim Übergang von dem einen zylindrischen Teil zum anderen zylindrischen Teil ermöglicht.

Zur Lösung dieser Aufgabe sieht die Erfindung vor, daß mindestens eines der ineinander zu steckenden, zylindrischen Teile ein Verbindungsstück aufweist, das vor der durchmesserreduzierenden Kaltverformung einen Innendurchmesser erhält, der größer ist als das gemeinsame Innendurchmesser-Endmaß beider Teile und daß die durchmesserreduzierende Kaltverformung sodann bis zur Erzielung der Verbindung beider Teile aneinander erfolgt.

Zur Vermeidung von unerwünschten Absätzen wird somit zumindest an einem der beiden Teile ein Verbindungsstück angeordnet und zunächst durch Kaltverformung aufgeweitet oder auf einen größeren Innendurchmesser aufgedreht, während dieses Teil im übrigen bereits das Innendurchmesser-Endmaß besitzt. Nach dem Aufschieben bzw. Ineinanderstecken wird sodann das jenige Teil, welches das zylindrische Verbindungsstück mit dem größeren Innendurchmesser aufweist, vorzugsweise durch Hämmern kaltverformt und dabei radial einwärts in seinem Durchmesser reduziert. Diese Kaltverformung wird so lange durchgeführt, bis eine sichere und feste Verbindung hergestellt ist.

Vorzugsweise kann ein Stützdorn während der durchmesserreduzierenden Kaltverformung Verwendung finden, damit das innen befindliche Teil der auftretenden Belastung standhält oder seine Festigkeit bzw. sein Materialquerschnitt größer sind als beim anderen Teil.

Gemäß einer bevorzugten Ausführungsform der Erfindung ist ferner vorgesehen, daß die Verbindungsstücke beider Teile vor der durchmesserreduzierenden Kaltverformung einen Innendurchmesser erhalten, der größer ist als das gemeinsame Innendurchmesser-Endmaß beider Teile und daß die durchmesserreduzierende Kaltverformung sodann bis zur Erzielung des Innendurchmesser-Endmaßes erfolgt. In diesem Fall werden zunächst beide Teile durch Kaltverformung aufgeweitet oder auf einen größeren Innendurchmesser aufgedreht, als es dem Innendurchmesser-Endmaß entspräche. Beim Verbinden durch Hämmern werden sodann beide Verbindungsstücke durch radial einwärts gerichteten Druck im Durchmesser reduziert, bis ein glatter Innendurchgang gegeben ist. Dabei ist es ferner vorteilhaft, wenn beide Verbindungsstücke im Ausgangszustand je einen radial auswärts gerichteten Absatz aufweisen, der während der durchmesserreduzierenden Kaltverformung eingeebnet wird.

Weitere Merkmale der Erfindung gehen aus der Beschreibung und den Ansprüchen im Zusammenhang mit der Zeichnung hervor.

Die Erfindung wird nachstehend anhand von Ausführungsbeispielen, die in der Zeichnung dargestellt sind, näher beschrieben. Dabei zeigen:

Fig. 1: im Schnitt sowie abgebrochen zwei ineinander steckbare, zylindrische Teile vor der Kaltverformung;

Fig. 2: eine Ansicht wie in Fig. 1 nach der Kaltverformung;

Fig. 3: eine Ansicht wie in Fig. 1 von einer abgewandelten Ausführungsform;

Fig. 4: eine Ansicht wie in Fig. 3 nach der Kaltverformung;

Fig. 5: im Schnitt sowie abgebrochen ein weiteres Ausführungsbeispiel vor der Kaltverformung;

Fig. 6: eine Ansicht wie in Fig. 5 nach der Kaltverformung;

Fig. 7: im Schnitt sowie abgebrochen ein letztes Ausführungsbeispiel vor der Kaltverformung und

Fig. 8: eine Ansicht wie in Fig. 7 nach der Kaltverformung.

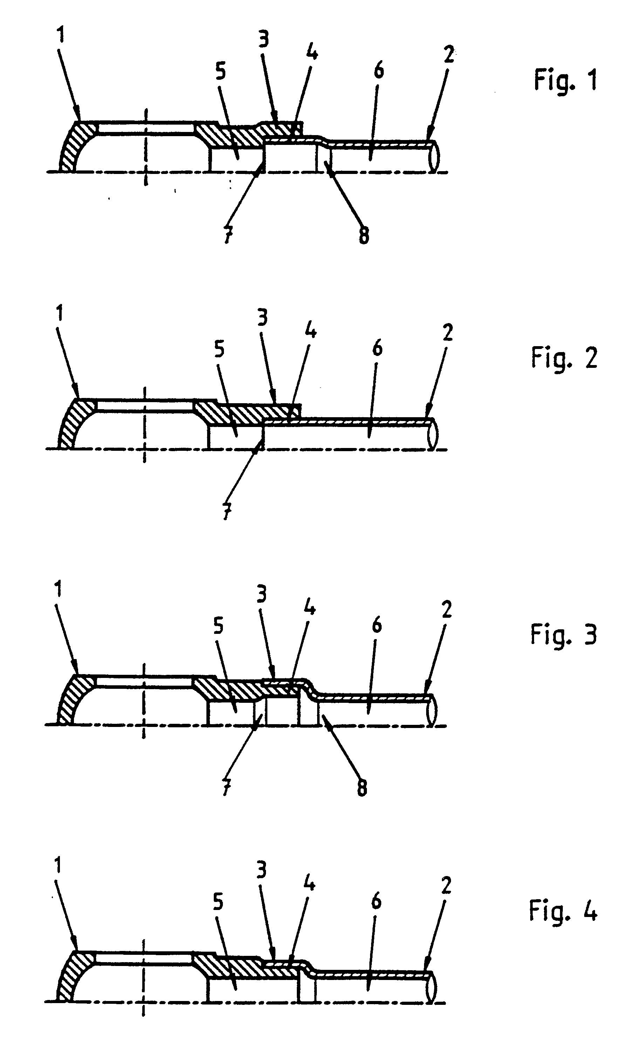

Zum Verbinden von zwei ineinander steckbaren, zylindrischen Teilen 1 und 2, bei denen es sich um Rohrenden oder um sonstige Anschlußteile für Rohre oder Schläuche und dgl. handeln kann, sind diese mit Verbindungsstücke 3, 4 versehen. Gemäß den in den Figuren 1 und 3 dargestellten Ausführungsbeispielen erhalten die ineinander zu steckenden Verbindungsstücke 3, 4 zunächst, d.h. vor der durchmesserreduzierenden Kaltverformung einen Innendurchmesser, der größer ist als das gemeinsame Innendurchmesser-Endmaß beider Teile 1, 2 gemäß Figur 2. Hierzu weist sowohl die Innenwand 5 des einen Teiles 1 als auch die Innenwand 6 des anderen Teiles 2 einen radial auswärts gerichteten Absatz 7 bzw. 8 auf. Bei dem in Figur 1 dargestellten Ausführungsbeispiel sind die beiden Teile 1 und 2 derart ineinander gesteckt, daß das Teil 1 mit seinem Verbindungsstück 3 das Verbindungsstück 4 des anderen Teiles 2 übergreift. Entsprechend ist der Innendurchmesser des Verbindungsstückes 3 vor der durchmesserreduzierenden Kaltverformung um das Maß der radialen Stauchung und um das Maß der Materialstärke des Verbindungsstückes 4 größer als das gemeinsame Innendurchmesser-Endmaß beider Teile 1, 2.

Bei dem in Figur 3 dargestellten Ausführungsbeispiel ist das zylindrische Verbindungsstück 3 des Teiles 1 in das zylindrische Verbindungsstück 4 des anderen Teiles 2 eingeschoben. Entsprechend ist hier der Innendurchmesser des Verbindungsstückes 4 um das Maß der durchmesserreduzierenden Kaltverformung bzw. Rückstauchung und um das Maß der Materialstärke des Verbindungsstückes 3 größer als das gemeinsame Innendurchmesser-Endmaß beider Teile 1, 2. Dabei weist das Verbindungsstück 3 gegenüber der nicht zu reduzierenden Innenwand 5 am Teil 1 ebenfalls einen radial auswärts gerichteten Absatz 7 auf, der bei der durchmesserreduzierenden Kaltverformung zurückgestaucht wird. Die Aufweitung im Bereich der Verbindungsstücke 3 und 4 erfolgt entweder durch Kaltverformung oder durch Ausdrehen. Diesbezüglich ist das jeweils zweckmäßigste Herstellungsverfahren werkstoffabhängig und dem Fachmann grundsätzlich geläufig.

Der Innendurchmesser des zylindrischen Verbindungsstückes 4 am Teil 2 gemäß Figur 1 ist vor der durchmesserreduzierenden Kaltverformung um das Maß der radialen Rückstauchung größer als der Innendurchmesser der Innenwand 6.

Für das zweite, in Figur 3 dargestellte Ausführungsbeispiel gilt bezüglich des Innendurchmessers am Verbindungsstück 4 vor der durchmesserreduzierenden Kaltverformung grundsätzlich dasselbe wie für das Verbindungsstück 3 des Teiles 1 gemäß Figur 1. Am Verbindungsstück 4 ist der Innendurchmesser vor der durchmesserreduzierenden Kaltverformung daher um das Maß der radialen Rückstauchung und um das Maß der Materialstärke des anzuschließenden Verbindungsstückes 3 größer als das gemeinsame Innendurchmesser-Endmaß beider Teile 1, 2.

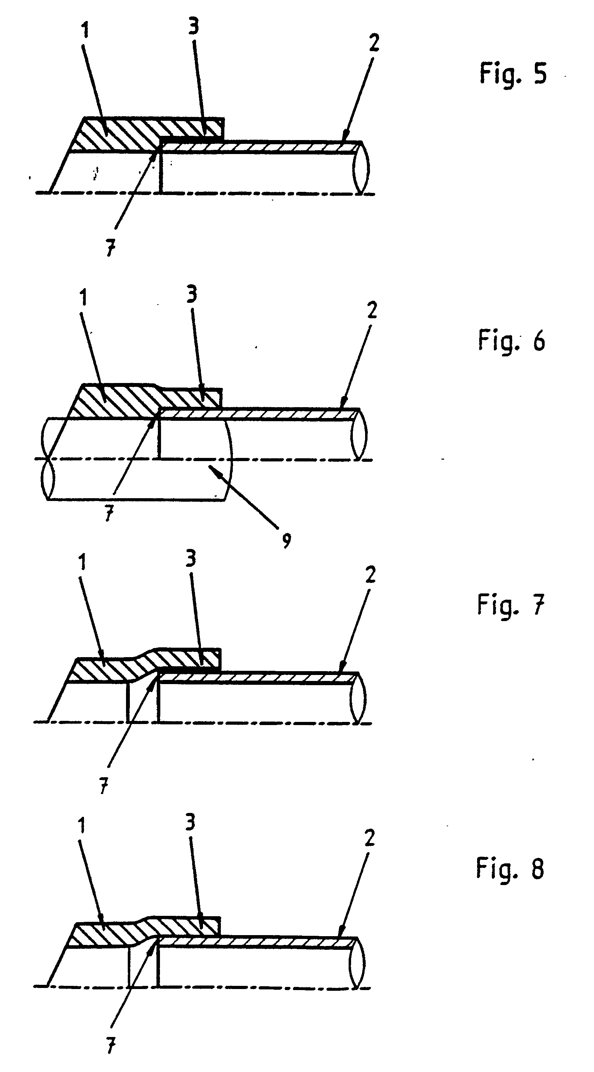

Bei den in den Figuren 5 und 7 dargestellten Ausführungsbeispielen weist nur das Verbindungsstück 3 des einen Teiles 1 vor der durchmesserreduzierenden Kaltverformung einen Innendurchmesser auf, der größer ist. Der Innendurchmesser des Verbindungsstückes 3 ist dabei so gewählt, daß das Teil 1 mit ausreichend Spiel auf das andere Teil 2 aufgeschoben werden kann (Fig. 5 und 7). Das Teil 1 weist daher wiederum innen einen radial auswärts gerichteten Absatz 7 auf, der der Materialstärke des Teiles 2 und dem erforderlichen Spiel zum Zusammenstecken der beiden Teile 1 und 2 entspricht. Bei der durchmesserreduzierenden Kaltverformung wird das Verbindungsstück 3 auf das Teil 2 verlagert, wobei das Teil 2 innen z.B. mit Hilfe eines Stützdornes 9 abgestützt werden kann. Nach dem Herstellen der Verbindung der beiden Teile 1 und 2 aneinander liegt ein glatter Durchgang vor.

Das in Figur 7 dargestellte Ausführungsbeispiel unterscheidet sich von der Ausführungsform gemäß Figur 5 nur hinsichtlich der Festigkeit oder Materialstärke des Teiles 2. Hier ist der Materialquerschnitt des innen liegenden Teiles 2 größer als der des anderen Teiles 1 bzw. mindestens so groß, daß die Materialfestigkeit des Teiles 2 ausreicht, um bei der durchmesserreduzierenden Kaltverformung auf einen Stützdorn 9 verzichten zu können.

## Ansprüche

1) Verfahren zum Verbinden von zwei ineinander steckbaren zylindrischen Teilen, insbesondere von Rohrenden aneinander bzw. mit Rohr- oder Schlauchanschlußteilen mit Hilfe durchmesserreduzierender Kaltverformung, dadurch gekennzeichnet, daß mindestens eines der ineinander zu steckenden, zylindrischen Teile (1, 2) ein Verbindungsstück (3, 4) aufweist, das vor der durchmesserreduzierenden Kaltverformung einen Innendurchmesser erhält, der größer ist als das gemeinsame Innendurchmesser-Endmaß beider Teile (1, 2) und daß die durchmesserreduzierende Kaltverformung sodann bis zur Erzielung der Verbindung beider Teile (1, 2) aneinander erfolgt.

2) Verfahren nach Anspruch 1, dadurch gekennzeichnet, daß beide Verbindungsstücke vor der durchmesserreduzierenden Kaltverformung einen Durchmesser erhalten, der größer ist als das gemeinsame Innendurchmesser-Endmaß beider Teile (1, 2) und daß die durchmesserreduzierende Kaltverformung sodann bis zur Erzielung des Innendurchmesser-Endmaßes erfolgt.

3) Verfahren nach Anspruch 1 oder 2, dadurch gekennzeichnet, daß mindestens eines der beiden Teile (1, 2) vor der Durchmesserreduzierung im Bereich der Verbindungsstücke (3, 4) durch Kaltverformung aufgeweitet wird.

4) Verfahren nach einem der Ansprüche 1 oder 2, dadurch gekennzeichnet, daß beide Verbindungsstücke (3, 4) mindestens je einen Absatz (7, 8) erhalten, der während der durchmesserreduzierenden Kaltverformung eingeebnet wird.

5) Verfahren nach einem der Ansprüche 1 - 4, dadurch gekennzeichnet, daß ein Stützdorn (9) verwendet wird.

6) Verfahren nach einem der Ansprüche 1 - 5, dadurch gekennzeichnet, daß die durchmesserreduzierende Kaltverformung durch Hämmern erfolgt.

7) Verbindungsstück zur Durchführung des Verfahrens nach einem der Ansprüche 1 - 6, dadurch gekennzeichnet, daß der Innendurchmesser des zylindrischen Verbindungsstückes (3) vor der durchmesserreduzierenden Kaltverformung um das Maß der radialen Stauchung und um die Materialstärke des Verbindungsstückes (4) des anderen Teiles (2) größer ist als das gemeinsame Innendurchmesser-Endmaß beider Teile (1, 2).

8) Verbindungsstück zur Durchführung des Verfahrens nach einem der Ansprüche 1 - 6, dadurch gekennzeichnet, daß innen ein Absatz (7) zur Aufnahme des zylindrischen Verbindungsstückes (4) des anderen Teiles (2) bzw. des anderen Teiles (2) vorgesehen und um das Maß der Materialstärke des anderen Verbindungsstückes (4) bzw. des anderen Teiles (2) und zusätzlich um das Maß der radialen Stauchung im Innendurchmesser größer ist als das gemeinsame Innendurchmesser-Endmaß beider Teile (1, 2).

9) Verbindungsstück zur Durchführung des Verfahrens nach einem der Ansprüche 1 - 6, dadurch gekennzeichnet, daß der Materialquerschnitt des innen einzusteckenden Teiles (2) größer ist als der des aufnehmenden Teiles (2).

Fig. 1

Fig. 2

Fig. 3

Fig. 4

EP 0 390 047 A1

Fig. 5

Fig. 6

Fig. 7

Fig. 8

| | EINSCHLÄGIGE DOKUMENTE | | EP 90105748.9 | |
|---|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | <u>DE - A1 - 3 117 901</u> <br> (NUOVO PIGNONE SP.A.) <br> * Gesamt * <br> -- | 1,5 | F 16 L 13/14 <br> F 16 L 33/00 <br> F 16 L 37/00 |
| A | <u>GB - A - 1 528 230</u> <br> (HERMANN HEMSCHEIDT MASCHINEN-FABRIK) <br> * Gesamt * <br> ---- | 1,5 | |
| | | | **RECHERCHIERTE SACHGEBIETE (Int Cl.⁵)** <br><br> F 16 L 13/00 <br> F 16 L 21/00 <br> F 16 L 33/00 <br> F 16 L 37/00 |

Der vorliegende Recherchenbericht wurde für alle Patentansprüche erstellt.

| Recherchenort | Abschlußdatum der Recherche | Prüfer |
|---|---|---|
| WIEN | 01-06-1990 | SCHUGANICH |